# EUROPEAN PATENT SPECIFICATION

(11) **EP 4 318 143 B1**
(45) Date of publication and mention of the grant of the patent: **03.12.2025**
(21) Application number: 23189275.3
(22) Date of filing: 02.08.2023
(51) Int. Cl.: G05B 19/042, F02C 9/00, G05B 23/02

(54) **SYSTEM AND METHOD FOR ADDRESSING REDUNDANT SENSOR MISMATCH IN AN ENGINE CONTROL SYSTEM**
SYSTEM UND VERFAHREN ZUR ADRESSIERUNG EINER REDUNDANTEN SENSORFEHLANPASSUNG IN EINEM MOTORSTEUERUNGSSYSTEM
SYSTÈME ET PROCÉDÉ POUR TRAITER UNE DÉSADAPTATION DE CAPTEUR REDONDANT DANS UN SYSTÈME DE COMMANDE DE MOTEUR

(30) Priority: 02.08.2022 US 202217879464
(43) Date of publication of application: 07.02.2024
(73) Proprietor: PRATT & WHITNEY CANADA CORP., Longueuil, Québec J4G 1A1 (CA)
(72) Inventor: GHARAGOZLOO, Alireza, (01BE5) Longueuil, J4G 1A1 (CA); TABAR, Roja, (01BE5) Longueuil, J4G 1A1 (CA)
(74) Representative: Dehns

(56) References cited:
- EP-B1- 3 527 803
- US-A1- 2005 228 619
- US-A1- 2009 043 447
- US-B1- 10 249 109
- US-B2- 9 558 667

## Description

### BACKGROUND OF THE INVENTION

### Technical Field

The present disclosure relates to engine control systems and methods in general, and to systems and methods for addressing redundant sensor mismatch in an engine control system.

### Background Information

Modern aircraft electronic control systems include various redundant components, such as a dual-channel Engine Control Unit (ECU), sensors that provide input signals to the ECU, and actuators commanded by ECU output signals to measure engine parameters. Sensors are often electrically redundant, but are mechanically prone to failures (e.g., FOD exposure, material fatigue, installation degradation etc.). Engine and aircraft manufacturers mitigate the potential for failure by using multiple sensors, albeit at an increase in cost and system complexity. Engine sensor failures can occur in a variety of different ways (e.g., sending out-of-range signals, mismatch errors, etc.) that can be detected with control system logic and be accommodated via the redundant source of the signal.

The term "mismatch error" refers to a scenario wherein redundant sensors (e.g., a sensor having a plurality of channels) each produce signal values representative of a function or a parameter being sensed within a range indicating that the component is operating properly (i.e., the signals are "in-range"), but the redundant sensors or sensor channels are producing signal values different from one another while sensing the same parameter. The disparity between the signals produced by the redundant sensors provides uncertainty regarding which sensor output is accurate and which is skewed signal data. Existing aircraft electronic control systems of which we are aware do not have the capability to establish the integrity and validity of the redundant sensor signals.

What is needed is an aircraft electronic control system that can accommodate sensor discrepancies and in particular discrepancies between redundant sensors such as mismatch errors.

EP 3 527 803 B1 discloses a prior art engine control system which is configured to determine a cross-channel mismatch value associated with first and second actuator position sensors and determine a single channel fault associated with one of the position sensors in response to the cross-channel mismatch value exceeding a channel differential threshold value.

### SUMMARY

According to an aspect of the present invention, a method for processing parameter values from a redundant sensor configured to sense a parameter used in the control of an aircraft engine, the redundant sensor disposed within an aircraft is provided, as claimed in claim 1.

The redundant sensor may have a plurality of channels and the respective first parameter value may be produced by a first channel of the redundant sensor and the respective second parameter value may be produced by a second channel of the redundant sensor.

The database of parameter values representative of the sensed parameter may include data representative of parameter values previously collected from the aircraft.

The predicted parameter value may at least in part be based on the data representative of parameter values previously collected from the aircraft included within the database.

The predicted parameter value may at least in part be based on operational data values collected at the time the mismatched parameter values are produced.

The method may further include the step of storing the plurality of parameter values from the redundant sensor produced during a mission of the aircraft.

The method may further include the step of downloading the stored plurality of parameter values from the redundant sensor produced during the mission of the aircraft to a remote system portion for processing into a form for updating the Al model.

The remote system portion may be ground based, cloud based, or some combination thereof.

The method may further include the step of storing the plurality of parameter values from the redundant sensor produced during a mission of the aircraft and updating the Al model based on the plurality of parameter values from the redundant sensor produced during the mission of the aircraft.

The plurality of parameter values from the redundant sensor may be within a range indicating that a sensed portion of the aircraft engine is operating properly.

The sensed parameter may be one or more of pressure, temperature, aircraft altitude, speed, acceleration, power, torque, weight, or aircraft ambient conditions.

According to another aspect of the present invention, a control system for an aircraft engine of an aircraft is provided, as claimed in claim 9.

The EDR may be configured to store the plurality of parameter values from the redundant sensor produced during a mission of the aircraft, and may be configured to selectively download the stored plurality of parameter values from the redundant sensor to a remote system portion for processing into a form for updating the Al model.

The EDR may be configured to store the plurality of parameter values from the redundant sensor produced during a mission of the aircraft and to update the Al model based on the plurality of parameter values.

According to an aspect of the present invention, a method for processing parameter values from redundant sensors configured to sense a parameter used in the control of an aircraft engine is provided, as claimed in claim 15.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic sectional view of a gas turbine engine.
FIG. 2 is a schematic diagram of a present disclosure system embodiment.

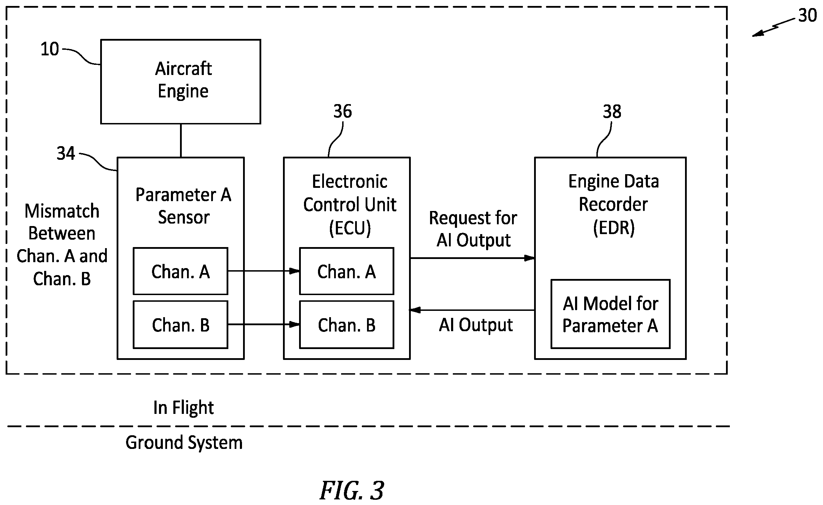

FIG. 3 is a schematic diagram of a present disclosure system embodiment.

### DETAILED DESCRIPTION

The present disclosure is directed to systems and methods used to control operational aspects of an aircraft engine. Modern aircraft (fixed wing or rotary blade) utilize a variety of different types of engine control systems including, but not limited to full authority digital engine controls (FADEC), electronic engine controls (EEC), engine control units (ECU), digital engine controls (DEC) and the like. The present disclosure may be utilized in a variety of different engine control systems and is therefore not limited to use with any particular type of control system. To simplify the description herein, the present disclosure will be described in terms of an electronic control unit (ECU) but is not limited to use therewith.

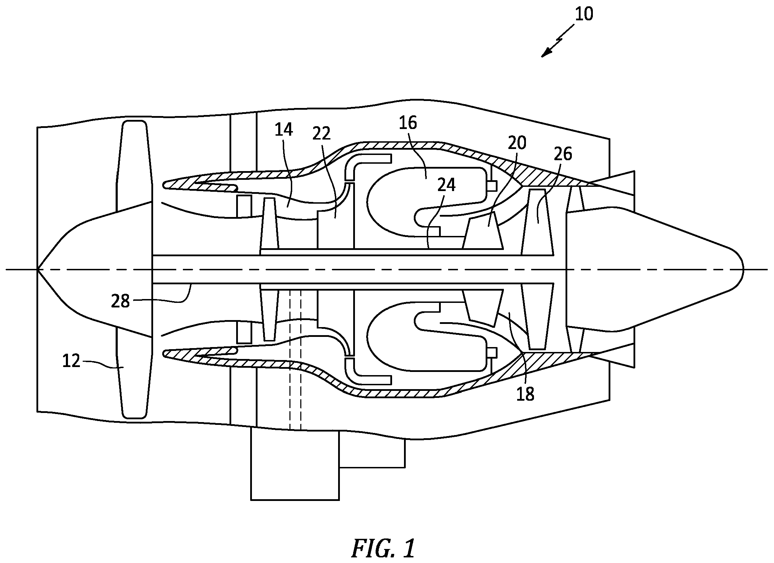

FIG. 1 illustrates an exemplary gas turbine engine 10 of a type preferably provided for use in subsonic flight. The engine 10 includes a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. High pressure rotor(s) 20 of the turbine section 18 are drivingly engaged to high pressure rotor(s) 22 of the compressor section 14 through a high pressure shaft 24. Low pressure rotor(s) 26 of the turbine section 18 are drivingly engaged to the fan 12 rotor and to other low pressure rotor(s) (not shown) of the compressor section 14 through a low pressure shaft 28 extending within the high pressure shaft 24 and rotating independently therefrom. Although illustrated as a turbofan engine in FIG. 1, the present disclosure is applicable to a variety of other types of gas turbine engines including turboshaft engines as well as other types of aircraft engines such as auxiliary power units (APUs), rotary engines, electric engines, and hybrid electric propulsion systems having a propeller driven in a hybrid architecture (series, parallel, or series/parallel) or turboelectric architecture (turboelectric or partial turboelectric).

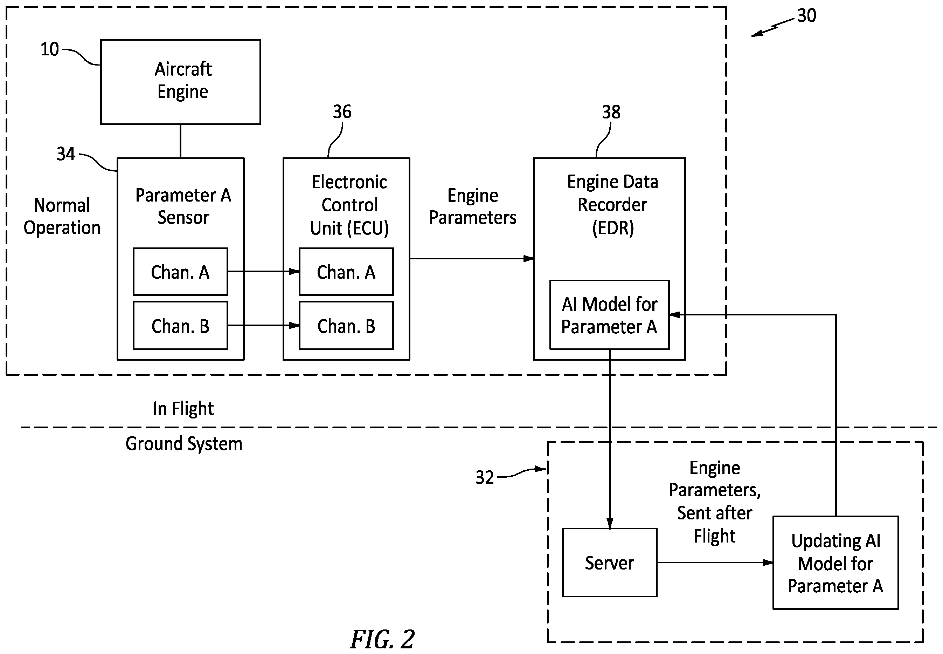

FIG. 2 schematically illustrates a present disclosure system that includes an aircraft 30 and a remote system portion 32 (i.e., remote relative to the aircraft) in accordance with one or more embodiments of the present disclosure. The aircraft 30 has an engine 10 (e.g., such as that shown in FIG. 1) and includes a sensor 34 sensing a "Parameter "A", an electronic control unit (ECU) 36, and an engine data recorder (EDR) 38. The schematic illustration of the aircraft 30 having a sensor 34 for sensing Parameter A (which sensor 34 is hereinafter referred to as "Sensor A") is for explanation purposes and to simplify the description herein. The present disclosure is applicable to aircraft systems having a plurality of sensors 34 configured to sense a variety of different parameters. The present disclosure is not limited to any particular type of sensor 34. The term "Parameter A" is used herein to generically refer to any type of parameter that can be sensed in an aircraft application that may be considered by the ECU 36. Nonlimiting examples of parameters that may be sensed by a sensor 34 include pressure (e.g., engine inlet total pressure, interstage pressure, engine pressure ratio or EPR), temperature (e.g., engine inlet total temperature, turbine inlet temperature, interstage temperature, engine exhaust gas temperature or EGT), altitude, speed (e.g., rotor speed of the engine's low-pressure rotor and high-pressure rotor, measured in RPM), acceleration, power, torque, flight and ambient conditions (e.g., ambient pressure and temperature), aircraft loading (e.g., weight of the aircraft, weight of fuel, etc., which may be determined directly or indirectly), and the like. Sensor A may be configured to produce signal data representative of Parameter A in real-time or at regular intervals during a flight mission of the aircraft 30.

The ECU 36, EDR 38, and other components within the present disclosure system may each include a controller that may be in communication with other system components (e.g., sensors, effectors, etc.) to receive signals from and/or transmit signals to that component to perform the functions described herein. A controller may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the system to accomplish the same algorithmically and/or coordination of system components. A controller may include or be in communication with one or more memory devices. The memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. Communications between the controller and other system components may be via a hardwire connection.

The ECU 36 may include a controller and is configured to perform a variety of tasks, including receiving data signals from sensors 34 that sense aircraft operating parameters such as those listed above. The ECU 36 continuously analyzes the sensor data signal inputs and sends commands to control components (e.g., effectors such as solenoids, motors, actuators, valves, and the like) to control engine performance and provide the desired performance while keeping the engine within safe and efficient engine operating parameters. An ECU 36 typically has the ability to automatically detect issues within the aircraft, an engine, or the ECU 36 itself and includes logic designed to mitigate those issues through backup functions or reverting to a safe operating state. The ECU 36 also communicates data (e.g., engine parameter data) to the EDR 38. The data communicated by the ECU 36 to the EDR 38 may be raw data or processed data, or any combination thereof.

The ECU 36 may be configured to communicate data to the EDR 38 in real-time or at regular intervals during a flight mission of the aircraft 30. In some embodiments, the ECU 36 may be configured to communicate certain data to the EDR 38 during a flight mission of the aircraft 30 (in real-time or intervals) and other data may be communicated at the end of the aircraft's flight mission. As used herein, the term "mission" refers to a flight to perform a specific task. The mission may be defined by various parameters, such as flight speeds, altitudes, duration, destination, weight, and any flying parameters to be used during the mission.

The EDR 38 may include a controller and is configured to store sensor data communicated to the EDR 38 from the ECU 36. The EDR 38 is configured to store sensor data communicated to the EDR 38 from the ECU 36 for a current flight, and may be configured to store sensor data communicated to the EDR 38 from the ECU 36 for one or more previous flights. The EDR 38 includes an artificial intelligence (AI) model configured to model parameter data (e.g., such as Parameter A) under engine operating conditions, including on ground operating conditions and in flight operating conditions. The EDR 38 is configured to selectively communicate with the remote system portion 32; e.g., send parameter data - raw or processed - to a server disposed within the remote system portion 32, and receive data and/or instructions (e.g., executable Al model files, an updated version of the Al model stored within the EDR 38, etc.) from the remote system portion 32.

The remote system portion 32 is disposed remote from the aircraft 30 (e.g., ground based, cloud based, etc.) and may include one or more controllers (e.g., a server) configured to receive parameter data - raw and/or processed - from the EDR 38. The same controller or another controller in communication with the remote system portion 32 is configured with the Al model for Parameter A that may be updated with parameter data received from the EDR 38. The present disclosure is not limited to any particular means of communicating between the EDR 38 and the remote system portion 32; e.g., the communication may be made by wired connection, wireless connection, or via a portable device used to download the data.

As indicated above, aircraft control systems often employ redundant sensors 34 (independent of one another) or a redundant sensor 34 having a plurality of sensing channels. The present disclosure is described herein in terms of a redundant sensor 34 having a plurality of sensing channels but is not limited thereto. Under normal operations with a redundant sensor 34 (e.g., Sensor A) that is configured to produce data signals representative of sensed Parameter A in each of a plurality of channels (e.g., two or more channels, such as Channel A and Channel B), the parameter values in each channel equal one another. In this scenario, the ECU 36 will select the parameter value from one of the channels for further processing as part of the control of the engine. It should be noted that in some embodiments, an ECU 36 may be configured to evaluate the parameter values from the different sensor channels to determine if a difference exists. If a parameter value difference does exist, the difference may be evaluated against a "mismatch difference threshold". If the magnitude of difference between the mismatched parameter values is below the mismatch difference threshold, then the difference between the mismatched parameter values may be ignored (e.g., the mismatched data signal although different are so close that they are functionally equivalent for operational purposes) and the parameter values may be processed in the same manner as if the parameter values equaled one another. Conversely, if the magnitude of difference between the mismatched parameter values is great enough such that the difference cannot be ignored (but the mismatched parameter values are still in-range), then one of the mismatched parameter values likely must be selected for further processing as part of the control of the engine.

Conventional control systems often addressed mismatched parameter values (i.e., different but still in-range) from a redundant sensor 34 by configuring the ECU 36 to select a value that is "safer" or "more conservative" for operational purposes. For example, a difference in rotor speed parameter values from a redundant sensor 34 (e.g., a first rotor speed value in a first channel and a second rotor speed value in a second channel, where the first rotor speed value does not equal the second rotor speed value) may be addressed by ECU logic that selects the higher rotor speed parameter value to mitigate the possibility of a rotor overspeed condition. As another example, when a redundant sensor 34 produces a difference in inlet temperature values (e.g., a first inlet temperature value in a first channel and a second inlet temperature value in a second channel, where the first inlet temperature value does not equal the second inlet temperature value), some prior art applications address this issue by ECU logic selecting a default inlet temperature value. An issue with this conservative conventional approach is that there is no evaluation of which of the mismatched parameter values is accurate. Another issue with this conservative conventional approach is that the selected parameter value (e.g., rotor speed, inlet temperature, etc.) may in fact be skewed from an actual value which in turn may lead to non-optimal engine power/thrust output or reduced efficiency.

The present disclosure provides a significant improvement that addresses scenarios such as those described above wherein a redundant sensor 34 provides mismatched parameter values that are in-range utilizing artificial intelligence. The present disclosure may utilize a variety of different Al models including those that include statistical learning methods, or heuristic methods, or the like. The present disclosure is not limited to using any particular Al model.

For a given aircraft 30 with a particular propulsion system (e.g., aircraft engine) and a given Sensor A, a database of operational parameter data is produced (e.g., through the sensors 34 and the ECU 36) and stored (e.g., in the EDR 38 and the remote system portion 32). The operational parameter database is typically produced during a number of flight missions. The number of flight missions used to accumulate an acceptable amount of parameter data for the database can vary depending upon a variety of different factors, but typically the number is chosen to provide a parameter database that is acceptable to adequately train an Al model. The present disclosure may be used with a variety of different aircraft, or with a particular aircraft having a plurality of different configurations, and therefore is not limited to any particular aircraft / aircraft configuration. An Al model may be trained for each aircraft / aircraft configuration.

As stated above, the EDR 38 is configured with an Al model for the parameter under consideration (e.g., Parameter A). In the event a redundant sensor 34 provides mismatched parameter values (e.g., in Channels A and B), the ECU 36 is configured to request the EDR 38 produce a predicted value for the mismatched in-range parameter values. To produce the predicted parameter value, the EDR 38 uses the Al model trained for Parameter A. The Al model uses or is based on the database of operational parameter data collected from previous flight missions and may take into account other factors including current operational conditions. The predicted value based on previous flight mission operational parameter data, and in some instances current operational conditions, provides information to the ECU 36 that can be used to evaluate which of the mismatched in-range parameter values is more appropriate for further processing as part of the control of the engine. The ECU 36 may be configured to then use that information in its selection of one of the mismatched in-range parameter values for further processing as part of the control of the engine. In this manner, the present disclosure is operable to improve the performance of the ECU 36 and likely the performance and reliability of the aircraft engine as well.

In some embodiments, embodiments of the present disclosure may be configured to periodically update the Al model used within the EDR 38 based on parameter data collected from additional aircraft flight missions. For example, over time an aircraft 30 may be operated numerous times within a variety of different flight missions. Embodiments of the present disclosure may be configured such that parameter data collected from these additional flight missions may be downloaded to the remote system portion 32. Within the remote system portion 32 the aforesaid collected parameter data may be processed (e.g., characterized by technicians, or synthesized, or the like) into a form (e.g., an executable file) acceptable to be input into the EDR Al model. This parameter data can then be uploaded to the EDR 38 and the EDR Al model can be updated using the same. The present disclosure is not limited to this example of how the EDR Al model may be updated. For example, as an alternative the remote system portion 32 may also have a copy of the EDR Al model. In this case, the parameter data in form to be input into the Al model may be incorporated into the Al model residing within the remote system portion 32 for updating purposes. The now updated Al model residing within the remote system portion 32 may then be used to update the Al model disposed within the EDR 38.

In some embodiments, the updating of the EDR Al model may be performed on a periodic scheduled basis, or the updating of the EDR Al model may be performed on a "need" basis (e.g., based on collected sensor data - including the event of a redundant sensor 34 producing mismatched parameter data), or both. As indicated above, the present disclosure provides a methodology for selecting a parameter data value produced by a redundant sensor 34 when the redundant sensor 34 produces mismatched parameter values, albeit parameter values that are in-range. In this manner, the present disclosure permits continued operation of the aircraft 30 and its engine(s) despite the fact that a redundant sensor 34 is providing mismatched parameter values. In other words, the present disclosure provides a methodology that permits evaluation of parameter values and a selection of a redundant parameter value with confidence based on historical flight data. In this manner, it is understood that the present disclosure can positively affect the performance of the aircraft 30 and increase the operational reliability of the aircraft engine.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details. As an example, the present disclosure is described above with the EDR 38 having an Al model. In alternative embodiments, the Al model may be disposed within the aircraft control system outside of the EDR 38 but in communication with the EDR 38.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A method for processing parameter values from a redundant sensor (34) configured to sense a parameter used in the control of an aircraft engine (10) of an aircraft (30), the redundant sensor disposed within the aircraft (30), comprising:
providing a plurality of parameter values to a control unit (36) from the redundant sensor (34), the plurality of parameter values including first parameter values and second parameter values produced by the redundant sensor (34) sensing the same parameter at the same time;
using the control unit (36) to identify mismatched parameter values from the plurality of parameter values, wherein the mismatched parameter values include a respective said first parameter value and a respective said second parameter value produced by sensing the same parameter at the same time, wherein the respective said first parameter value and the respective said second parameter value do not equal one another;
**characterized in that** the method further comprises:
producing a predicted parameter value using an artificial intelligence AI, model that is trained using a stored database of parameter values representative of the sensed parameter, wherein the trained Al model produces the predicted parameter using data input representative of engine operating conditions existing at the time the redundant sensor is sensing the parameter;
providing the predicted parameter value to the control unit (36); and
operating the control unit (36) to select the respective said first parameter value or the respective said second parameter value using the predicted parameter for use in the control of the aircraft engine (10).

2. The method of claim 1, wherein the redundant sensor (34) has a plurality of channels and the respective said first parameter value is produced by a first channel of the redundant sensor (34) and the respective said second parameter value is produced by a second channel of the redundant sensor.

3. The method of claim 1 or 2, wherein the database of parameter values representative of the sensed parameter includes data representative of parameter values previously collected from the aircraft (30).

4. The method of claim 3, wherein the predicted parameter value is at least in part based on the data representative of parameter values previously collected from the aircraft (30) included within the database, and/or wherein the predicted parameter value is at least in part based on operational data values collected at the time the mismatched parameter values are produced.

5. The method of any preceding claim, further comprising storing the plurality of parameter values from the redundant sensor (34) produced during a mission of the aircraft (30), and, optionally, updating the Al model based on the plurality of parameter values from the redundant sensor (34) produced during the mission of the aircraft (30) .

6. The method of claim 5, further comprising downloading the stored plurality of parameter values from the redundant sensor (34) produced during the mission of the aircraft (30) to a remote system portion (32) for processing into a form for updating the Al model, wherein, optionally, the remote system portion (32) is ground based, cloud based, or some combination thereof.

7. The method of any preceding claim, wherein the plurality of parameter values from the redundant sensor (34) are within a range indicating that a sensed portion of the aircraft engine (10) is operating properly.

8. The method of any preceding claim, wherein the sensed parameter is one or more of pressure, temperature, aircraft altitude, speed, acceleration, power, torque, weight, or aircraft ambient conditions.

9. A control system for an aircraft engine (10) of an aircraft (30), the control system comprising:
an electronic control unit, ECU, (36);
a redundant sensor (34) disposed within the aircraft (30) and in communication with the ECU (36), the redundant sensor (34) configured to sense a parameter used in the control of the aircraft engine (10), and to produce a plurality of parameter values including first parameter values and second parameter values by sensing the parameter at the same time; and
an engine data recorder, EDR, (38) in communication with the ECU, the EDR having an artificial intelligence, AI, model that is trained using a stored database of parameter values representative of the sensed parameter;
wherein the ECU (36) is configured to identify mismatched parameter values received from the redundant sensor (34), wherein the mismatched parameter values include a respective said first parameter value and a respective said second parameter value produced by sensing the same said parameter at the same time, wherein the respective said first parameter value and the respective said second parameter value do not equal one another;
the control system being **characterized in that**:
the EDR (38) is configured to produce a predicted parameter value using the trained Al model and data input representative of engine operating conditions existing at the time the redundant sensor is sensing the parameter, and to selectively communicate the predicted parameter value to the ECU; and
the ECU (36) is configured to select the respective said first parameter value or the respective said second parameter value using the predicted parameter for use in the control of the aircraft engine (10).

10. The control system of claim 9, wherein the redundant sensor (34) has a plurality of channels and the respective said first parameter value is produced by a first channel of the redundant sensor (34) and the respective said second parameter value is produced by a second channel of the redundant sensor (34).

11. The control system of claim 9 or 10, wherein the database of parameter values representative of the sensed parameter includes data representative of parameter values previously collected from the aircraft (30), and, optionally, the predicted parameter value is at least in part based on the data representative of parameter values previously collected from the aircraft (30) included within the database.

12. The control system of claim 9, 10 or 11, wherein the EDR (38) is configured to store the plurality of parameter values from the redundant sensor produced during a mission of the aircraft (30), and is configured to:
selectively download the stored plurality of parameter values from the redundant sensor (34) to a remote system portion (32) for processing into a form for updating the Al model; and/or
update the Al model based on the plurality of parameter values.

13. The control system of any of claims 9 to 12, wherein the plurality of parameter values from the redundant sensor (34) are within a range indicating that a sensed portion of the aircraft engine (10) is operating properly.

14. The control system of any of claims 9 to 13, wherein the sensed parameter is one or more of pressure, temperature, aircraft altitude, speed, acceleration, power, torque, weight, or aircraft ambient conditions.

15. A method for processing parameter values from redundant sensors (34) configured to sense a parameter used in the control of an aircraft engine (10), the redundant sensors (34) disposed within an aircraft (30), comprising:
producing a plurality of first parameter values from a first redundant sensor (34) configured to sense a parameter;
producing a plurality of second parameter values from a second redundant sensor (34) configured to sense the parameter;
wherein the first sensor (34) and the second sensor (34) are configured to sense the parameter at the same time;
identifying a mismatch between the first parameter values and the second parameter values, wherein the first parameter values and the second parameter values produced by sensing the parameter at the same time do not equal one another;
**characterized in that** the method further comprises:
producing a predicted parameter value using an artificial intelligence, AI, model that is trained using a stored database of parameter values representative of the sensed parameter, wherein the trained Al model produces the predicted parameter using data input representative of engine operating conditions existing at the time the redundant sensor is sensing the parameter;
providing the predicted parameter value to a control unit (36); and
operating the control unit (36) to select at least one of the first parameter values or at least one of the second parameter values using the predicted parameter for use in the control of the aircraft engine (10).

## Patentansprüche

1. Verfahren zum Verarbeiten von Parameterwerten von einem redundanten Sensor (34), der dazu konfiguriert ist, einen Parameter zu erfassen, der bei der Steuerung eines Luftfahrzeugmotors (10) eines Luftfahrzeugs (30) verwendet wird, wobei der redundante Sensor innerhalb des Luftfahrzeugs (30) angeordnet ist, umfassend:
Bereitstellen einer Vielzahl von Parameterwerten von dem redundanten Sensor (34) an eine Steuereinheit (36), wobei die Vielzahl von Parameterwerten erste Parameterwerte und zweite Parameterwerte beinhaltet, die dadurch erzeugt werden, dass der redundante Sensor (34) denselben Parameter gleichzeitig erfasst;
Verwenden der Steuereinheit (36), um fehlangepasste Parameterwerte aus der Vielzahl von Parameterwerten zu identifizieren, wobei die fehlangepassten Parameterwerte einen jeweiligen ersten Parameterwert und einen jeweiligen zweiten Parameterwert beinhalten, die durch gleichzeitiges Erfassen desselben Parameters erzeugt werden, wobei der jeweilige erste Parameterwert und der jeweilige zweite Parameterwert nicht gleich sind;
**dadurch gekennzeichnet, dass** das Verfahren ferner Folgendes umfasst:
Erzeugen eines vorhergesagten Parameterwerts unter Verwendung eines Modells künstlicher Intelligenz (KI), das unter Verwendung einer gespeicherten Datenbank mit Parameterwerten trainiert ist, die für den erfassten Parameter stehen, wobei das trainierte KI-Modell den vorhergesagten Parameter unter Verwendung einer Dateneingabe erzeugt, die für die Motorbetriebsbedingungen steht, die zu dem Zeitpunkt vorliegen, zu dem der redundante Sensor den Parameter erfasst;
Bereitstellen des vorhergesagten Parameterwerts an die Steuereinheit (36); und
Betreiben der Steuereinheit (36), um den jeweiligen ersten Parameterwert oder den jeweiligen zweiten Parameterwert unter Verwendung des vorhergesagten Parameters zur Verwendung bei der Steuerung des Luftfahrzeugmotors (10) auszuwählen.

2. Verfahren nach Anspruch 1, wobei der redundante Sensor (34) eine Vielzahl von Kanälen aufweist und der jeweilige erste Parameterwert durch einen ersten Kanal des redundanten Sensors (34) erzeugt wird und der jeweilige zweite Parameterwert durch einen zweiten Kanal des redundanten Sensors erzeugt wird.

3. Verfahren nach Anspruch 1 oder 2, wobei die Datenbank mit Parameterwerten, die für die erfassten Parameter stehen, Daten beinhaltet, die für zuvor von dem Luftfahrzeug (30) erhobene Parameterwerte stehen.

4. Verfahren nach Anspruch 3, wobei der vorhergesagte Parameterwert mindestens teilweise auf den Daten basiert, die für zuvor von dem Luftfahrzeug (30) erhobene Parameterwerte stehen, die in der Datenbank beinhaltet sind, und/oder wobei der vorhergesagte Parameterwert mindestens teilweise auf Betriebsdatenwerten basiert, die zum Zeitpunkt der Erzeugung der fehlangepassten Parameterwerte erhoben werden.

5. Verfahren nach einem der vorhergehenden Ansprüche, ferner umfassend Speichern der Vielzahl von Parameterwerten von dem redundanten Sensor (34), die während eines Einsatzes des Luftfahrzeugs (30) erzeugt wird, und optional Aktualisieren des KI-Modells basierend auf der Vielzahl von Parameterwerten von dem redundanten Sensor (34), die während des Einsatzes des Luftfahrzeugs (30) erzeugt wird.

6. Verfahren nach Anspruch 5, ferner umfassend Herunterladen der gespeicherten Vielzahl von Parameterwerten von dem redundanten Sensor (34), die während des Einsatzes des Luftfahrzeugs (30) erzeugt wird, auf einen entfernten Systemteil (32) zum Verarbeiten in eine Form zum Aktualisieren des KI-Modells, wobei der entfernte Systemteil (32) optional bodengestützt, cloudgestützt oder eine Kombination davon ist.

7. Verfahren nach einem der vorhergehenden Ansprüche, wobei die Vielzahl von Parameterwerten von dem redundanten Sensor (34) innerhalb eines Bereichs liegt, der angibt, dass ein erfasster Teil des Luftfahrzeugmotors (10) ordnungsgemäß funktioniert.

8. Verfahren nach einem der vorhergehenden Ansprüche, wobei es sich bei dem erfassten Parameter um eines oder mehrere von Druck, Temperatur, Flughöhe, Geschwindigkeit, Beschleunigung, Leistung, Drehmoment, Gewicht oder Umgebungsbedingungen des Luftfahrzeugs handelt.

9. Steuerungssystem für einen Luftfahrzeugmotor (10) eines Luftfahrzeugs (30), wobei das Steuerungssystem Folgendes umfasst:
eine elektronische Steuereinheit (electronic control unit - ECU) (36) ;
einen redundanten Sensor (34), der innerhalb des Luftfahrzeugs (30) und in Kommunikation mit der ECU (36) angeordnet ist, wobei der redundante Sensor (34) dazu konfiguriert ist, einen bei der Steuerung des Luftfahrzeugmotors (10) verwendeten Parameter zu erfassen und eine Vielzahl von Parameterwerten zu erzeugen, die erste Parameterwerte und zweite Parameterwerte beinhaltet, indem der Parameter gleichzeitig erfasst wird; und
einen Motordaten-Recorder (engine data recorder - EDR) (38) in Kommunikation mit der ECU, wobei der EDR ein Modell künstlicher Intelligenz (KI) aufweist, das unter Verwendung einer gespeicherten Datenbank mit Parameterwerten trainiert ist, die für den erfassten Parameter stehen;
wobei die ECU (36) dazu konfiguriert ist, von dem redundanten Sensor (34) empfangene fehlangepasste Parameterwerte zu identifizieren, wobei die fehlangepassten Parameterwerte einen jeweiligen ersten Parameterwert und einen jeweiligen zweiten Parameterwert beinhalten, die durch gleichzeitiges Erfassen desselben Parameters erzeugt werden, wobei der jeweilige erste Parameterwert und der jeweilige zweite Parameterwert nicht gleich sind;
wobei das Steuerungssystem **dadurch gekennzeichnet ist, dass**:
der EDR (38) dazu konfiguriert ist, unter Verwendung des trainierten KI-Modells und einer Dateneingabe, die für die Motorbetriebsbedingungen steht, die zu dem Zeitpunkt vorliegen, zu dem der redundante Sensor den Parameter erfasst, einen vorhergesagten Parameterwert zu erzeugen und den vorhergesagten Parameterwert selektiv an die ECU zu übermitteln; und
die ECU (36) dazu konfiguriert ist, den jeweiligen ersten Parameterwert oder den jeweiligen zweiten Parameterwert unter Verwendung des vorhergesagten Parameters zur Verwendung bei der Steuerung des Luftfahrzeugmotors (10) auszuwählen.

10. Steuerungssystem nach Anspruch 9, wobei der redundante Sensor (34) eine Vielzahl von Kanälen aufweist und der jeweilige erste Parameterwert durch einen ersten Kanal des redundanten Sensors (34) erzeugt wird und der jeweilige zweite Parameterwert durch einen zweiten Kanal des redundanten Sensors (34) erzeugt wird.

11. Steuerungssystem nach Anspruch 9 oder 10, wobei die Datenbank mit Parameterwerten, die für den erfassten Parameter stehen, Daten beinhaltet, die für zuvor von dem Luftfahrzeug (30) erhobene Parameterwerte stehen, und wobei der vorhergesagte Parameterwert optional mindestens teilweise auf den innerhalb der Datenbank beinhalteten Daten basiert, die für zuvor von dem Luftfahrzeug (30) erhobene Parameterwerte stehen.

12. Steuerungssystem nach Anspruch 9, 10 oder 11, wobei der EDR (38) dazu konfiguriert ist, die Vielzahl von Parameterwerten von dem redundanten Sensor zu speichern, die während eines Einsatzes des Luftfahrzeugs (30) erzeugt wird, und dazu konfiguriert ist:
die gespeicherte Vielzahl von Parameterwerten zum Verarbeiten in eine Form zum Aktualisieren des KI-Modells selektiv von dem redundanten Sensor (34) in einen entfernten Systemteil (32) herunterzuladen; und/oder
das KI-Modell basierend auf der Vielzahl von Parameterwerten zu aktualisieren.

13. Steuerungssystem nach einem der Ansprüche 9 bis 12, wobei die Vielzahl von Parameterwerten von dem redundanten Sensor (34) innerhalb eines Bereichs liegt, der angibt, dass ein erfasster Teil des Luftfahrzeugmotors (10) ordnungsgemäß funktioniert.

14. Steuerungssystem nach einem der Ansprüche 9 bis 13, wobei es sich bei dem erfassten Parameter um eines oder mehrere von Druck, Temperatur, Flughöhe, Geschwindigkeit, Beschleunigung, Leistung, Drehmoment, Gewicht oder Umgebungsbedingungen des Luftfahrzeugs handelt.

15. Verfahren zum Verarbeiten von Parameterwerten von redundanten Sensoren (34), die dazu konfiguriert sind, einen Parameter zu erfassen, der bei der Steuerung eines Luftfahrzeugmotors (10) verwendet wird, wobei die redundanten Sensoren (34) innerhalb eines Luftfahrzeugs (30) angeordnet ist, umfassend:
Erzeugen einer Vielzahl von ersten Parameterwerten von einem ersten redundanten Sensor (34), der dazu konfiguriert ist, einen Parameter zu erfassen;
Erzeugen einer Vielzahl von zweiten Parameterwerten von einem zweiten redundanten Sensor (34), der dazu konfiguriert ist, den Parameter zu erfassen;
wobei der erste Sensor (34) und der zweite Sensor (34) dazu konfiguriert sind, den Parameter gleichzeitig zu erfassen;
Identifizieren einer Fehlanpassung zwischen den ersten Parameterwerten und den zweiten Parameterwerten, wobei die ersten Parameterwerte und die zweiten Parameterwerte, die durch gleichzeitiges Erfassen des Parameters erzeugt werden, nicht gleich sind;
**dadurch gekennzeichnet, dass** das Verfahren ferner Folgendes umfasst:
Erzeugen eines vorhergesagten Parameterwerts unter Verwendung eines Modells künstlicher Intelligenz (KI), das unter Verwendung einer gespeicherten Datenbank mit Parameterwerten trainiert ist, die für den erfassten Parameter stehen, wobei das trainierte KI-Modell den vorhergesagten Parameter unter Verwendung einer Dateneingabe erzeugt, die für die Motorbetriebsbedingungen steht, die zu dem Zeitpunkt vorliegen, zu dem der redundante Sensor den Parameter erfasst;
Bereitstellen des vorhergesagten Parameterwerts an eine Steuereinheit (36); und
Betreiben der Steuereinheit (36), um mindestens einen der ersten Parameterwerte oder mindestens einen der zweiten Parameterwerte unter Verwendung des vorhergesagten Parameters zur Verwendung bei der Steuerung des Luftfahrzeugmotors (10) auszuwählen.

## Revendications

1. Procédé de traitement de valeurs de paramètres provenant d'un capteur redondant (34) configuré pour détecter un paramètre utilisé dans la commande d'un moteur d'aéronef (10) d'un aéronef (30), le capteur redondant étant disposé à l'intérieur de l'aéronef (30), comprenant :
la fourniture d'une pluralité de valeurs de paramètres à une unité de commande (36) provenant du capteur redondant (34), la pluralité de valeurs de paramètres comportant des premières valeurs de paramètres et des secondes valeurs de paramètres produites par le capteur redondant (34) détectant le même paramètre en même temps ;
l'utilisation de l'unité de commande (36) pour identifier des valeurs de paramètres désadaptées parmi la pluralité de valeurs de paramètres, dans lequel les valeurs de paramètres désadaptées comportent une ladite première valeur de paramètre respective et une ladite seconde valeur de paramètre respective produites par la détection du même paramètre en même temps, dans lequel ladite première valeur de paramètre respective et ladite seconde valeur de paramètre respective ne sont pas égales l'une à l'autre ;
**caractérisé en ce que** le procédé comprend également :
la production d'une valeur du paramètre prédit à l'aide d'un modèle d'intelligence artificielle, IA, qui est formé à l'aide d'une base de données stockée de valeurs de paramètres représentative du paramètre détecté, dans lequel le modèle d'IA formé produit le paramètre prédit à l'aide d'une entrée de données représentative de conditions de fonctionnement du moteur existant au moment où le capteur redondant détecte le paramètre ;
la fourniture de la valeur du paramètre prédit à l'unité de commande (36) ; et
la mise en fonctionnement de l'unité de commande (36) pour sélectionner ladite première valeur de paramètre respective ou ladite seconde valeur de paramètre respective à l'aide du paramètre prédit pour une utilisation dans la commande du moteur d'aéronef (10).

2. Procédé selon la revendication 1, dans lequel le capteur redondant (34) a une pluralité de canaux et ladite première valeur de paramètre respective est produite par un premier canal du capteur redondant (34) et ladite seconde valeur de paramètre respective est produite par un second canal du capteur redondant.

3. Procédé selon la revendication 1 ou 2, dans lequel la base de données de valeurs de paramètres représentatives du paramètre détecté comporte des données représentatives de valeurs de paramètres précédemment collectées à partir de l'aéronef (30).

4. Procédé selon la revendication 3, dans lequel la valeur du paramètre prédit est au moins en partie basée sur les données représentatives de valeurs de paramètres précédemment collectées à partir de l'aéronef (30) incluses à l'intérieur de la base de données, et/ou dans lequel la valeur du paramètre prédit est au moins en partie basée sur des valeurs de données opérationnelles collectées au moment où les valeurs de paramètres désadaptées sont produites.

5. Procédé selon une quelconque revendication précédente, comprenant également le stockage de la pluralité de valeurs de paramètres provenant du capteur redondant (34) produites pendant une mission de l'aéronef (30), et, éventuellement, la mise à jour du modèle d'IA sur la base de la pluralité de valeurs de paramètres provenant du capteur redondant (34) produites pendant la mission de l'aéronef (30).

6. Procédé selon la revendication 5, comprenant également le téléchargement de la pluralité stockée de valeurs de paramètres provenant du capteur redondant (34) produites pendant la mission de l'aéronef (30) vers une partie système distante (32) pour traitement sous une forme permettant de mettre à jour le modèle d'IA, dans lequel, éventuellement, la partie système distante (32) est basée au sol, en nuage, ou une combinaison des deux.

7. Procédé selon une quelconque revendication précédente, dans lequel la pluralité de valeurs de paramètres provenant du capteur redondant (34) sont dans une plage indiquant qu'une partie détectée du moteur d'aéronef (10) fonctionne correctement.

8. Procédé selon une quelconque revendication précédente, dans lequel le paramètre détecté est l'un ou plusieurs de la pression, la température, l'altitude de l'aéronef, la vitesse, l'accélération, la puissance, le couple, le poids, ou les conditions ambiantes de l'aéronef.

9. Système de commande pour un moteur d'aéronef (10) d'un aéronef (30), le système de commande comprenant :
une unité de commande électronique, ECU, (36) ;
un capteur redondant (34) disposé à l'intérieur de l'aéronef (30) et en communication avec l'ECU (36), le capteur redondant (34) étant configuré pour détecter un paramètre utilisé dans la commande du moteur de l'aéronef (10), et pour produire une pluralité de valeurs de paramètres comportant des premières valeurs de paramètres et des secondes valeurs de paramètres en détectant le paramètre en même temps ; et
un enregistreur de données moteur, EDR, (38) en communication avec l'ECU, l'EDR ayant un modèle d'intelligence artificielle, IA, qui est formé à l'aide d'une base de données stockée de valeurs de paramètres représentatives du paramètre détecté ;
dans lequel l'ECU (36) est configurée pour identifier des valeurs de paramètres désadaptées reçues à partir du capteur redondant (34), dans lequel les valeurs de paramètres désadaptées comportent une ladite première valeur de paramètre respective et une ladite seconde valeur de paramètre respective produites par la détection dudit même paramètre en même temps, dans lequel ladite première valeur de paramètre respective et ladite seconde valeur de paramètre respective ne sont pas égales l'une à l'autre ;
le système de commande étant **caractérisé en ce que** :
l'EDR (38) est configuré pour produire une valeur du paramètre prédit à l'aide du modèle d'IA formé et d'une entrée de données représentative des conditions de fonctionnement du moteur existant au moment où le capteur redondant détecte le paramètre, et pour communiquer sélectivement la valeur du paramètre prédit à l'ECU ; et
l'ECU (36) est configurée pour sélectionner ladite première valeur de paramètre respective ou ladite seconde valeur de paramètre respective à l'aide du paramètre prédit pour une utilisation dans la commande du moteur d'aéronef (10).

10. Système de commande selon la revendication 9, dans lequel le capteur redondant (34) a une pluralité de canaux et ladite première valeur de paramètre respective est produite par un premier canal du capteur redondant (34) et ladite seconde valeur de paramètre respective est produite par un second canal du capteur redondant (34).

11. Système de commande selon la revendication 9 ou 10, dans lequel la base de données de valeurs de paramètres représentatives du paramètre détecté comporte des données représentatives de valeurs de paramètres collectées précédemment à partir de l'aéronef (30), et, éventuellement, la valeur du paramètre prédit est au moins en partie basée sur les données représentatives de valeurs de paramètres collectées précédemment à partir de l'aéronef (30) incluses dans la base de données.

12. Système de commande selon la revendication 9, 10 ou 11, dans lequel l'EDR (38) est configuré pour stocker la pluralité de valeurs de paramètres provenant du capteur redondant produites pendant une mission de l'aéronef (30), et est configuré pour :
télécharger sélectivement la pluralité stockée de valeurs de paramètres à partir du capteur redondant (34) vers une partie distante du système (32) pour traitement sous une forme permettant de mettre à jour le modèle d'IA ; et/ou
mettre à jour le modèle d'IA sur la base de la pluralité de valeurs de paramètres.

13. Système de commande selon l'une quelconque des revendications 9 à 12, dans lequel la pluralité de valeurs de paramètres provenant du capteur redondant (34) sont dans une plage indiquant qu'une partie détectée du moteur d'aéronef (10) fonctionne correctement.

14. Système de commande selon l'une quelconque des revendications 9 à 13, dans lequel le paramètre détecté est l'un ou plusieurs de la pression, la température, l'altitude de l'aéronef, la vitesse, l'accélération, la puissance, le couple, le poids, ou les conditions ambiantes de l'aéronef.

15. Procédé de traitement de valeurs de paramètres provenant de capteurs redondants (34) configuré pour détecter un paramètre utilisé dans la commande d'un moteur d'aéronef (10), les capteurs redondants (34) étant disposés à l'intérieur d'un aéronef (30), comprenant :
la production d'une pluralité de premières valeurs de paramètres à partir d'un premier capteur redondant (34) configuré pour détecter un paramètre ;
la production d'une pluralité de secondes valeurs de paramètres à partir d'un second capteur redondant (34) configuré pour détecter le paramètre ;
dans lequel le premier capteur (34) et le second capteur (34) sont configurés pour détecter le paramètre en même temps ;
l'identification d'une désadaptation entre les premières valeurs de paramètres et les secondes valeurs de paramètres, dans lequel les premières valeurs de paramètres et les secondes valeurs de paramètres produites par la détection du paramètre en même temps ne sont pas égales les unes aux autres ;
**caractérisé en ce que** le procédé comprend également :
la production d'une valeur du paramètre prédit à l'aide d'un modèle d'intelligence artificielle, IA, qui est formé à l'aide d'une base de données stockée de valeurs de paramètres représentative du paramètre détecté, dans lequel le modèle d'IA formé produit le paramètre prédit à l'aide d'une entrée de données représentative de conditions de fonctionnement du moteur existant au moment où le capteur redondant détecte le paramètre ;
la fourniture de la valeur du paramètre prédit à une unité de commande (36) ; et
la mise en fonctionnement de l'unité de commande (36) pour sélectionner au moins l'une des premières valeurs de paramètres ou au moins l'une des secondes valeurs de paramètres à l'aide du paramètre prédit à utiliser dans la commande du moteur d'aéronef (10) .
